# EUROPÄISCHE PATENTANMELDUNG

(11) **EP 1 188 881 A1**
(43) Veröffentlichungstag der Anmeldung: **20.03.2002**
(21) Anmeldenummer: 01121531.6
(22) Anmeldetag: 10.09.2001
(51) Int. Cl.: E04H 4/16, E04H 4/12, A01K 63/04, A47L 11/30, B01D 21/00, B01D 35/16

(54) **Absaugsystem zur Reinigung von Teichen**

(30) Priorität: 18.09.2000 AT 15832000
(71) Anmelder: Hartl, Wolfgang, 4210 Gallneukirchen (AT)
(72) Erfinder: Hartl, Wolfgang, 4210 Gallneukirchen (AT)
(74) Vertreter: Landgraf, Elvira, Dipl.-Ing.

(57) **Zusammenfassung**

Die Erfindung betrifft ein Absaugsystem zur Reinigung von Teichen, wobei eine Trennung von Schlamm- und Schwebstoffen und festen Bestandteilen (Steine, Kies u. dgl.) erfolgt.

## Beschreibung

Bei Schwimm- und Zierteichen fallen immer wieder abgestorbene Pflanzenreste, Algen, Ausscheidungsprodukte von im Teich lebenden Tieren und dergleichen an, die als Schlamm abgelagert werden oder als Schwebstoffe das Wasser trüben.
Zur Reinigung des Teichwassers von diesen Schlamm- und Schwebstoffen werden diese mittels verschiedener Verfahren abgesaugt. Problematisch ist dabei, dass sich im Absaugbereich immer wieder auch größere feste Gegenstände, insbesondere Steine befinden, die dann mitgesaugt werden und Schäden in der Absaugpumpe verursachen.

Aufgabe der Erfindung war es daher ein Absaugsystem bereitzustellen, bei dem Schweb- und Weichstoffe von den festen Gegenständen, insbesondere Steinen oder Kies, getrennt werden und trotzdem eine effiziente Reinigung des Teichwassers von Schweb- und Weichstoffen und Schlamm gewährleistet ist.

Gegenstand der Erfindung ist daher ein Absaugsystem zur Reinigung von Teichen, dadurch gekennzeichnet, dass eine Tauch-Saugpumpe in einem luft- und wasserdicht abgeschlossenen Behälter in einem entsprechenden Abstand vom Behälterboden montiert ist, wobei die Ansaugöffnung der Tauch-Saugpumpe auf der bodenseitig gelegenen Pumpenseite liegt und der Behälter mit einem Ablauf- und Ansaugstutzen versehen ist,
wobei der Ansaugstutzen in einem Winkel von 75 bis 115° in den Behälter mündet.

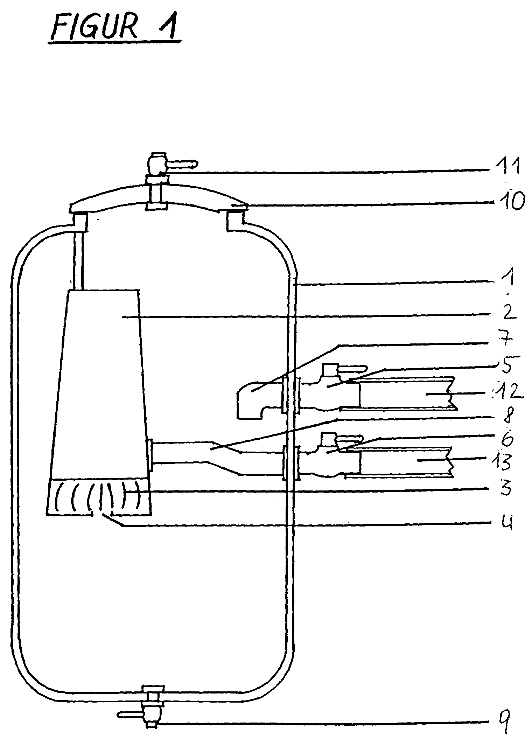

Figur 1 zeigt ein erfindungsgemäßes Absaugsystem.

Darin bedeutet 1 den luft- und wasserdicht abgeschlossenen Behälter, 2 eine Tauch-Saugpumpe, 3 das Schaufelrad der Pumpe, 4 die Ansaugöffnung, 5 den Ansaugstutzen, 6 den Ablaufstutzen mit einem Kugelhahn und dem abgewinkelten Rohrknie 7, 8 die Verbindung zwischen Ablaufstutzen und Pumpenablauf, 9 den Füll- und Entleerungshahn des Behälters, 10 den Behälterdeckel mit dem Entlüftungshahn 11, 12 den flexiblen Ansaugschlauch, 13 den Ablaufschlauch.

In dem luft- und wasserdicht abschließbaren Behälter 1 wird eine Tauch-SaugPumpe 2 so montiert, dass sie einen Abstand vom Behälterboden aufweist. Der Abstand vom Behälterboden ist abhängig von der Größe bzw. der Saugleistung der Tauch-Saugpumpe und vom Volumen des Behälters im Verhältnis zum Volumen der Saugpumpe. Üblicherweise beträgt der Abstand etwa 15 bis 30 cm.
Der Behälter ist außerdem mit einem Deckel 10 mit einem Entlüftungshahn 11 und einem bodenseitig angebrachten Füll- und Entleerungshahn 9 versehen.

Die Tauch-Saugpumpe weist ein Schaufelrad 3 auf, die Ansaugöffnung 4 der Pumpe ist auf der dem Behälterboden zugewandten Seite positioniert. An der Behälterwand befinden sich ein Ansaugstutzen 5, der mit einem flexiblen Schlauch 12 verbunden ist. Am Ende des flexiblen Schlauchs befindet sich ein Saugrohr oder eine Saugbürste oder dergleichen.

Der Ansaugstutzen 5 mündet frei über ein gewinkeltes Rohrknie 7 in den Behälter 1. Der Winkel beträgt etwa 75 bis 115 °, vorzugsweise etwa 90°.

Der Ablaufstutzen 6, der ebenfalls seitlich an der Behälterwand angebracht ist, ist über einen flexiblen Schlauch 8 mit der Ablauföffnung der Tauch-Saugpumpe verbunden. Nach außen ist ein flexibler Schlauch 13 zur Abführung des abgesaugten Wassers am Ablaufstutzen angebracht.
Sowohl Ansaug- als auch Ablaufstutzen sind mit einem absperrbaren Hahn, vorzugsweise einem Kugelhahn versehen.

Zur Inbetriebnahme des Absaugsystems werden die An- und Absaugstutzen mittels der absperrbaren Hähne geschlossen. Der Behälter wird über den Füllhahn mit Wasser gefüllt, wobei der im Deckel befindliche Entlüftungshahn geöffnet wird.

Nach vollständiger Füllung des Behälters werden Füll- und Entlüftungshahn geschlossen, die Pumpe eingeschaltet und Absaug- und Ansaughahn gleichzeitig geöffnet. Durch die Saugwirkung der Pumpe entsteht nun im Behälter ein Unterdruck, wodurch über den Ansaugstutzen bzw. den daran montierten Schlauch mit dem Sauggerät, beispielsweise einer Saugdüse oder einer Saugbürste, Wasser, Schlamm, Schwebeteilchen, Ablagerungen und auch Steine, Kies und dergleichen angesaugt werden.

Durch das gewinkelte nach unten Richtung Behälterboden weisende Rohrknie werden Wasser und feste bzw. kolloidale Verunreinigungen ins Innere des Behälters gebracht. Die im Wasser schwebend verteilten leichten Schlamm-Schwebeteilchen und die kolloidalen Verunreinigungen werden durch das Ansaugloch der Pumpe angesaugt und über den Ablaufschlauch und den Ablaufstutzen nach außen transportiert.
Die schwereren festen Verunreinigungen bzw. die mitangesaugten Steine oder der mitangesaugte Kies fallen auf den Behälterboden und werden dort abgelagert. Dadurch kann die Pumpe durch das Ansaugen von Steinen und Kies nicht beschädigt werden.

Das abgesaugte mit Schwebeteilchen und dergleichen verunreinigte Wasser kann durch den Ablaufstutzen abgeführt werden.
Ferner können am Ende des am Ablaufstutzen montierten Ablaufschlauchs übliche Filter montiert werden, durch die Schlamm und Schwebeteilchen aus dem Wasser gefiltert werden können, worauf das gereinigte Wasser dem Teich wieder zugeführt werden kann.

Die am Behälterboden zurückbleibenden festen Verunreinigungen, die Steine, der Kies können entweder im Rahmen der üblichen Wartung der Tauch-Saugpumpe nach Öffnen des Behälterdeckels entfernt werden.

Es ist aber auch denkbar, den Füll- bzw. Entleerungshahn so zu dimensionieren, dass kleinere Kiesstücke über diese Öffnung abgelassen werden können. Ferner ist es möglich an der Behälterunterseite eine geeignete verschließbare Öffnung zur Entfernung dieser Verunreinigungen vorzusehen.

Durch das erfindungsgemäße Absaugsystem ist eine effektive Reinigung des Teichwassers möglich, ohne die Gefahr einer Beschädigung der Tauch-Saugpumpe durch feste Bestandteile. Durch geeignete Dimensionierung von Behälter und Tauch-Saugpumpe ist es möglich, praktisch für alle möglichen Teichgrößen geeignete Absaugsysteme bereitzustellen. Wie bei üblichen Absaugsystemen wird die Leistung der Tauch-Saugpumpe einerseits der Teichgröße, andererseits dem Verschmutzungsgrad des Wasser anzupassen sein.

## Patentansprüche

1. Absaugsystem zur Reinigung von Teichen, **dadurch gekennzeichnet, dass** eine Tauch-Saugpumpe in einem luft- und wasserdicht abgeschlossenen Behälter in einem entsprechenden Abstand vom Behälterboden montiert ist, wobei die Ansaugöffnung der Tauch-Saugpumpe auf der bodenseitig gelegenen Pumpenseite liegt und der Behälter mit einem Ablauf- und Ansaugstutzen versehen ist, wobei der Ansaugstutzen in einem Winkel von 75 bis 115° in den Behälter mündet.

2. Absaugsystem nach Anspruch 1, **dadurch gekennzeichnet, dass** der Ansaugstutzen in einem Winkel von etwa 90° in den Behälter mündet.

3. Absaugsystem nach einem der Ansprüche 1 oder 2, **dadurch gekennzeichnet, dass** der Abstand der Tauch-Saugpumpe vom Behälterboden etwa 15 bis 30 cm beträgt.
